# EUROPEAN PATENT APPLICATION

(11) **EP 4 137 393 A1**
(43) Date of publication of application: **22.02.2023**
(21) Application number: 22188537.9
(22) Date of filing: 03.08.2022
(51) Int. Cl.: B62D 55/24

(54) **ELASTIC CRAWLER**

(30) Priority: 18.08.2021 JP 2021133312
(71) Applicant: Choi, Yong Jae, Daejeon 34125 (KR)
(72) Inventor: Choi, Yong Jae, Daejeon 34125 (KR)
(74) Representative: Schmitt-Nilson Schraud Waibel Wohlfrom Patentanwälte Partnerschaft mbB

(57) **Abstract**

To prevent vertical vibration of track rollers as much as possible when transferring between overhanging portions of each core metal while securing the flexibility of a crawler main body.

The present invention includes core metals 10 embedded in a crawler main body 9 at substantially equal intervals, and rolling paths 12, 13 for track rollers arranged on both sides in a crawler width direction of an anti-tread side of the crawler main body 9, and includes overhanging portions 24 to 27 on both sides in a crawler rotation direction of each core metal 10, overhanging from each core metal 10 toward both sides in the crawler rotation direction to support each of the rolling paths 12, 13. The respective overhanging portions 24 to 27 corresponding to the respective rolling paths 12, 13 of each core metal 10 are arranged such that at least tip portions are arranged so as to shift in the crawler width direction within a width of each rolling path 12, 13. Of each of the core metals 10, the overhanging portion 25 of one core metal 10 and the overhanging portion 26 of the other core metal 10 are arranged such that their tips are close to each other or overlap with each other in the crawler rotation direction.

## Description

### CROSS-REFERENCE TO RELATED APPLICATIONS

This application claims the benefit of Japanese Patent Application No. P-2021-133312, filed with the Japan Patent Office on August 18, 2021. The disclosures of the above applications are incorporated herein by reference in their entirety.

### BACKGROUND

### 1. Technical Field

The present invention relates to an elastic crawler capable of reducing vertical vibration of track rollers when adopted in a crawler device.

### 2. Description of the Related Art

The elastic crawler used in the crawler device includes a crawler main body composed of an elastic body, such as rubber, and core metals embedded in the crawler main body at substantially equal intervals in a crawler rotation direction, and includes rolling paths for track rollers on both sides in a crawler width direction of an anti-tread side, which is an inner circumference of the crawler main body, so that left and right wheel body portions of the track rollers roll on each rolling path when the crawler main body rotates.

With this kind of elastic crawler, there is one in which overhanging portions that overhang in the crawler rotation direction from both sides of each core metal are provided corresponding to each rolling path and each rolling path is supported inside the crawler main body by each overhanging portion, while a long overhanging portion having a long overhang amount from the core metal and a short overhanging portion having a short overhang amount are alternately arranged on both sides in the crawler rotation direction of each core metal, so that either the left or right wheel body portion of the track roller rolls via either the left or right overhanging portion when the crawler main body rotates (Patent Document 1).

### [Prior Art Document]

### [Patent Document]

[Patent Document 1] Japanese Published Unexamined Utility Model Application No. H6-71375

### SUMMARY OF THE INVENTION

In such an elastic crawler, since the track roller is on either the left or right overhanging portion, there is no drop of the track roller between the respective overhanging portions of the two adjacent core metals and vibration due to the vertical movement of the track roller can be prevented, even though the track roller rolls on the rolling paths while transferring between the respective overhanging portions.

However, in the conventional elastic crawler, the left-right width of the overhanging portions of each core metal is substantially the same as the left-right width of the rolling path, and in addition to being wide in left-right width of each overhanging portion, the distance between tip portions of the overhanging portions of the two adjacent core metals is short. Therefore, the conventional elastic crawler has a problem that the flexibility when the crawler main body is bent between the adjacent core metals is poor and a crack is likely to occur in the elastic body, such as rubber, constituting the crawler main body.

In view of such a conventional problem, the present invention aims to provide an elastic crawler capable of reducing the vertical vibration of the track rollers when transferring between the overhanging portions of each core metal while securing the flexibility of the crawler main body.

The present invention includes a crawler main body mainly composed of an elastic material and core metals embedded in the crawler main body at substantially equal intervals in a crawler rotation direction, includes rolling paths for track rollers on both sides in a crawler width direction of an anti-tread side of the crawler main body, and includes overhanging portions on both sides in the crawler rotation direction of each of the core metals, overhanging from each of the core metals toward both sides in the crawler rotation direction to support each of the rolling paths, wherein each of the overhanging portions corresponding to each of the rolling paths of two of the core metals adjacent to each other are arranged such that at least tip portions are arranged so as to shift in the crawler width direction within a width of each of the rolling paths, and of the two adjacent core metals, the overhanging portion of one of the core metals and the overhanging portion of the other core metal are arranged such that their tips are close to each other or overlap with each other in the crawler rotation direction.

Of each of the overhanging portions between the two adjacent core metals, one of the overhanging portions corresponding to one of the rolling paths of one of the core metals and the other overhanging portion corresponding to the other rolling path of the other core metal are also sometimes arranged such that their tips are close to each other or overlap with each other in the crawler rotation direction.

Of each of the overhanging portions between the two adjacent core metals, each of the overhanging portions corresponding to each of the rolling paths of one of the core metals and the other overhanging portion corresponding to each of the rolling paths of the other core metal are also sometimes arranged such that their tip portions are close to each other or overlap with each other in the crawler rotation direction.

On sides opposite to a shift direction of the overhang portions corresponding to the rolling paths between the two adjacent core metals, notched portions separated in the crawler rotation direction from the overhanging portions of the adjacent core metals are also sometimes provided in the rolling paths.

Two of the overhanging portions corresponding to each of the rolling paths of each of the core metals include a long overhanging portion and a short overhanging portion having different overhang lengths, and the long overhanging portion and the short overhanging portion are sometimes arranged substantially point-symmetrically with respect to the core metal.

Two of the overhanging portions corresponding to each of the rolling paths of the two adjacent core metals may be substantially equal in overhang length. Each of the overhanging portions has a thin flat shape in a crawler thickness direction and is sometimes arranged near an anti-tread side of each of the rolling paths.

Each of the core metals includes an intermediate support portion for supporting each of the rolling paths, in the middle of the crawler rotation direction between each of the overhanging portions so as to be substantially flush, and the rolling path sides of each of the overhanging portions and the intermediate support portion may be continuous in the crawler rotation direction.

The crawler main body includes recessed portions that are recessed from the rolling path side to the tread side, on both sides in the crawler width direction of each of the rolling paths between the respective adjacent core metals, and the rolling paths each may have a flat shape continuous in the crawler rotation direction via between the recessed portions.

The present invention has an advantage that the vertical vibration of the track rollers when transferring between the overhanging portions of each core metal can be reduced while securing the flexibility of the crawler main body.

### BRIEF DESCRIPTION OF THE DRAWINGS

FIG. 1 is a side view of a crawler device showing a first embodiment of the present invention.
FIG. 2 is a perspective view of an anti-tread side of the same elastic crawler.
FIG. 3 is a plan view of the anti-tread side of the same elastic crawler.
FIG. 4 is a cross-sectional view of a main part of the same elastic crawler.
FIG. 5 is a front cross-sectional view of the same elastic crawler.
FIG. 6 is a side cross-sectional view of the same elastic crawler.
FIG. 7 is a plan view of a tread side of the same elastic crawler.
FIG. 8 is a perspective view of core metals.
FIG. 9 is a plan view of the same core metals.
FIG. 10 is a front view of the same core metals.
FIG. 11 is a plan view of core metals showing a second embodiment of the present invention.
FIG. 12 is a plan view of core metals showing a third embodiment of the present invention.
FIG. 13 is a plan view of core metals showing a fourth embodiment of the present invention.
FIG. 14 is a plan view of core metals showing a fifth embodiment of the present invention.
FIG. 15 is a plan view of core metals showing a sixth embodiment of the present invention.
FIG. 16 is a plan view of core metals showing a seventh embodiment of the present invention.

### DETAILED DESCRIPTION OF THE INVENTION

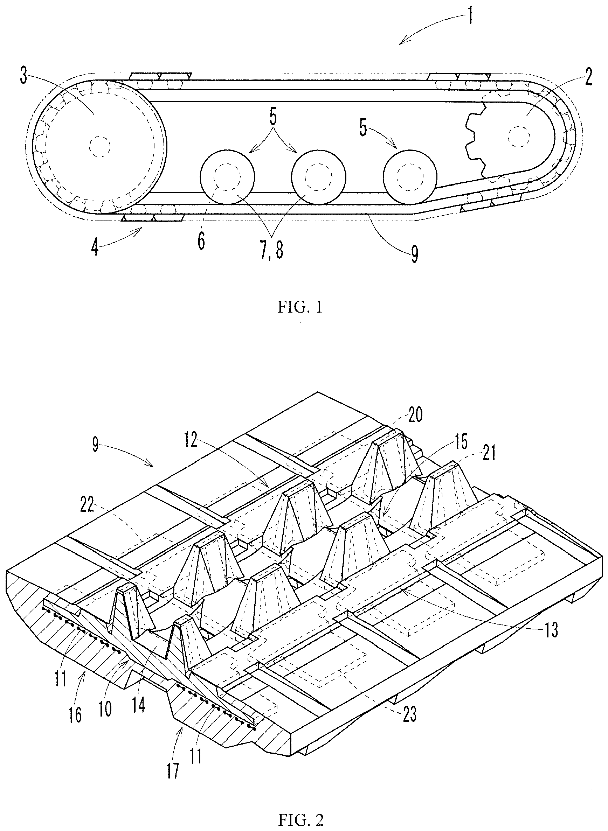

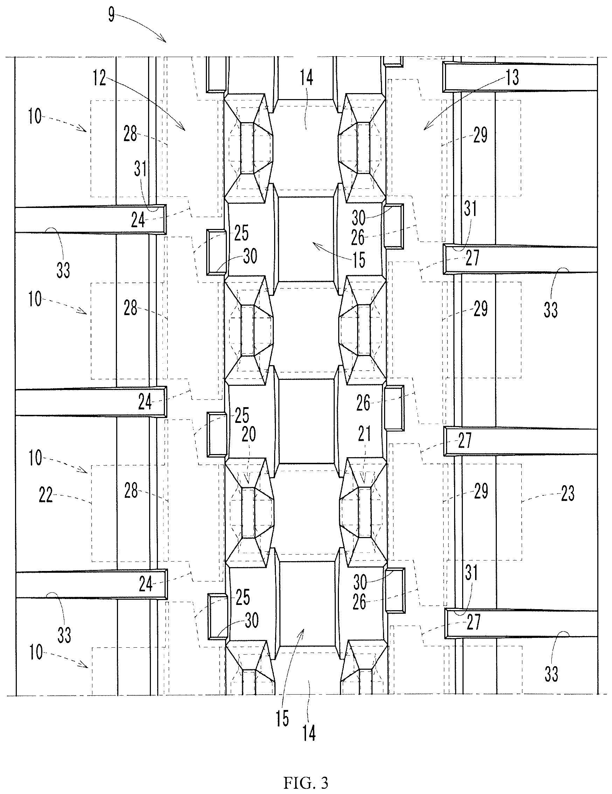

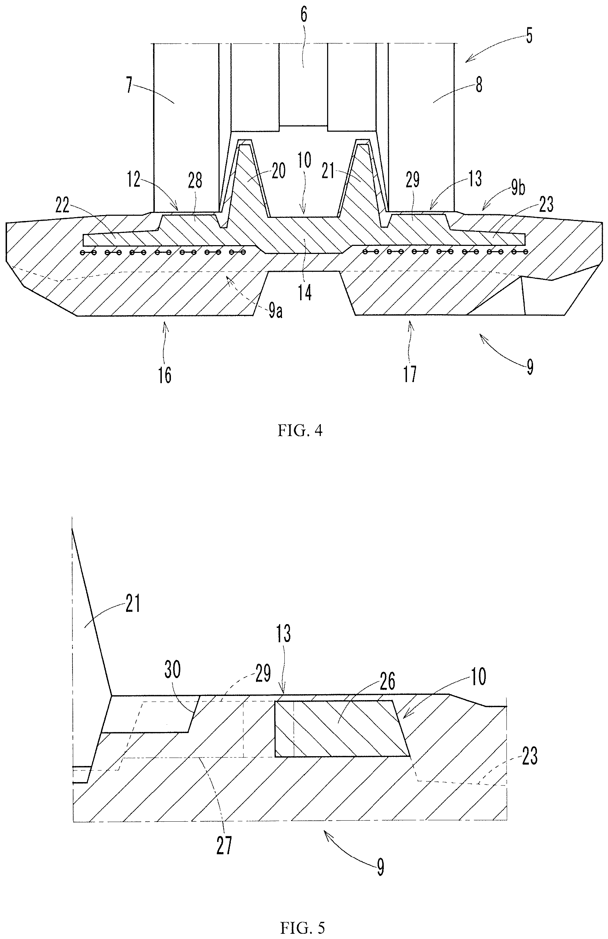

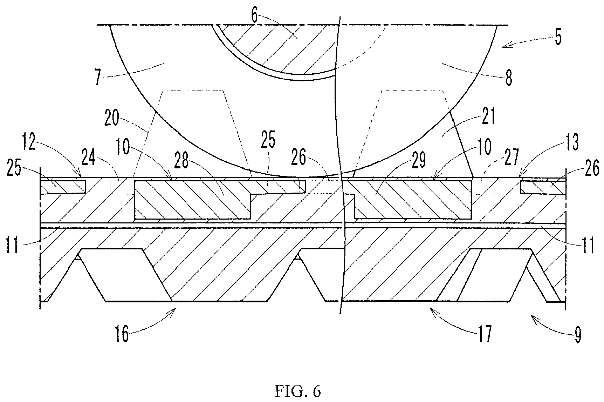

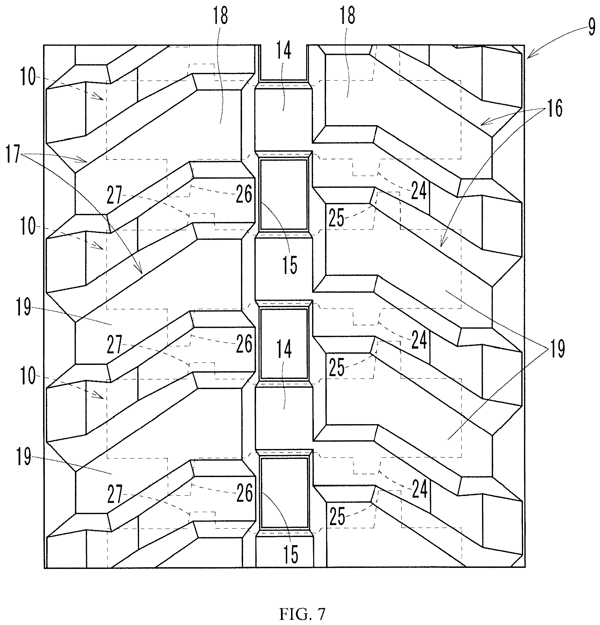

Hereinafter, each embodiment of the present invention will be described in detail based on the drawings. FIG. 1 to FIG. 10 exemplifies a first embodiment of the present invention. As shown in FIG. 1 to FIG. 7, a crawler device 1 includes a driving wheel 2 and a driven wheel 3 made of sprockets and arranged in the front and in the rear and an elastic crawler 4 rotatably wound across the driving wheel 2 and the driven wheel 3, and the elastic crawler 4 is guided by a plurality of track rollers 5 arranged between the driving wheel 2 and the driven wheel 3. As shown in FIG. 4, the track roller 5 has wheel body portions 7, 8 on both left and right sides of a shank portion 6. In the wheel body portions 7, 8, the left and right may rotate integrally about an axial center of the shank portion 6, and the left and right may rotate separately about the axial center of the shank portion 6.

The elastic crawler 4 includes an endless belt shaped crawler main body 9 mainly composed of an elastic body, such as rubber, core metals 10 of a crawler width direction (lateral direction) embedded in the crawler main body 9 at substantially equal intervals in a crawler rotation direction, and a tension member 11, such as a steel wire, embedded in the crawler main body 9 in the crawler rotation direction on a tread 9a side of the crawler main body 9 with respect to each core metal 10. On an anti-tread side 9b, which is an inner circumferential side of the crawler main body 9, a pair of left and right rolling paths 12, 13 are provided in the crawler rotation direction, corresponding to the left and right wheel body portions 7, 8 of the track roller 5.

The crawler main body 9 is provided with engaging holes 15 between engaging portions 14 of each of the core metals 10 in the center in the crawler width direction and is provided with drive lugs 16, 17 on the tread 9a side, on both sides in the crawler width direction with respect to each engaging hole 15. Each of the drive lugs 16, 17 has a wide width portion 18 on an inner side close to the engaging hole 15 and a narrow width portion 19 on an outer side distant from the engaging hole 15. The drive lugs 16, 17 on both sides are arranged in a staggered manner so as to correspond alternately on the left and right in the crawler rotation direction. The drive lugs 16, 17 are provided alternately on the left and right, corresponding to the engaging portion 14, the engaging hole 15, etc.

The core metal 10 is made by casting or forging and includes the engaging portion 14 that is arranged between the engaging holes 15 and engages with projections at outer circumferences of the driving wheel 2 and the driven wheel 3, guide protrusions 20, 21 that protrude in a crawler thickness direction from both sides in the crawler width direction of the engaging portion 14 toward the anti-tread 9b side and guide the driving wheel 2, the driven wheel 3, and the track rollers 5 from both the left and right sides, flat blade portions 22, 23 that protrude outward in the crawler width direction from the respective guide protrusions 20, 21, and overhanging portions 24 to 27 that are provided corresponding to the respective rolling paths 12, 13 and protrude from the respective blade portions 22, 23 toward both sides in the crawler rotation direction.

The guide protrusions 20, 21 have a top side formed into a substantially rectangular shape long in the crawler rotation direction in plan view so that the guide protrusions 20, 21 guide the driving wheel 2 and the driven wheel 3 from both sides by inner surfaces and guide the wheel body portions 7, 8 of the track rollers 5 from the inside by outer surfaces. The guide protrusions 20, 21 may have the top side formed into other shapes such as a substantially rhombic shape long in the crawler rotation direction in plan view.

The overhanging portions 24 to 27 each support the rolling paths 12, 13 of the crawler main body 9 from the inside and are provided on both sides in the crawler rotation direction of the core metal 10, corresponding to the rolling paths 12, 13 on both sides of the crawler main body 9, respectively. The overhanging portions 24 to 27 each have a dimension in the crawler thickness direction of a thin flat shape and are arranged on the anti-tread 9b side relative to the blade portions 22, 23 of the core metal 10 so as to support the rolling paths 12, 13 from the inside.

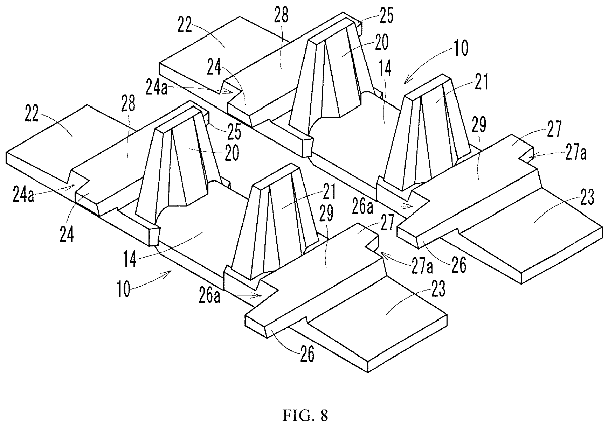

As shown in FIG. 8 to FIG. 10, the blade portions 22, 23 of each core metal 10 have intermediate support portions 28, 29 near the outside of the guide protrusions 20, 21, and the overhanging portions 24 to 27 protrude from the intermediate support portions 28, 29 toward both sides in the crawler rotation direction. The intermediate support portions 28, 29 are for supporting the rolling paths 12, 13 of the crawler main body 9 from the inside, similar to the overhanging portions 24 to 27. The intermediate support portions 28, 29 have a substantially oblong shape or a substantially rectangular shape long in the crawler rotation direction, and the overhanging portions 24 to 27 each protrude from the anti-tread 9b sides of the intermediate support portions 28, 29 on both sides in the crawler rotation direction. The anti-tread 9b sides of the intermediate support portions 28, 29, and the overhanging portions 24 to 27 are flat at substantially the same height.

Each core metal 10 includes four overhanging portions 24 to 27 protruding from the intermediate support portions 28, 29 on both sides in the crawler rotation direction, corresponding to the left and right rolling paths 12, 13. Of the four overhanging portions 24 to 27 of each core metal 10, one overhanging portion 25 corresponding to one rolling path 12 and the other overhanging portion 26 corresponding to the other rolling path 13 have an overhang length in the crawler rotation direction of substantially the same A, and the other overhanging portion 24 corresponding to one rolling path 12 and one overhanging portion 27 corresponding to the other rolling path 13 have an overhang length in the crawler rotation direction of substantially the same B.

The overhang length A of the overhanging portions 25, 26 is longer than the overhang length B of the overhanging portions 24, 27. Between two core metals 10 adjacent to each other in the crawler main body 9, an overlapping portion is formed in which tip portions of the overhanging portions 25, 26 of the core metals 10 overlap in the crawler rotation direction with an overlap amount C.

Between the two core metals 10 thus adjacent, the tips of one overhanging portion 25 corresponding to one rolling path 12 and the other overhanging portion 26 corresponding to the other rolling path 13 overlap in the crawler rotation direction with the overlap amount C, whereby the left and right wheel body portions 7, 8 of the track rollers 5 sequentially transfer between the two core metals 10 from one to the other side via the overlapping portion when rolling on the respective rolling paths 12, 13 of the crawler main body 9 at the time of rotation of the crawler main body 9. The vertical vibration due to the drop of the track roller 5 between the overhanging portions 25, 26 can be prevented. Therefore, the vertical vibration of the track roller 5 between the respective core metals 10 can be suppressed as much as possible also at the time of rotation of the crawler main body 9.

In the respective overhanging portions 24 to 27 corresponding to the respective rolling paths 12, 13 of each core metal 10, the tip portions in the crawler rotation direction are shifted in the crawler width direction within the width of each rolling path 12, 13. Thus, the flexibility of the crawler main body 9 when the crawler main body 9 is wound around the driving wheel 2, the driven wheel 3, etc., while being bent is improved, and as a result, the elastic body of the crawler main body 9 is less likely to crack or peel off, and the durability can also be improved.

That is, the intermediate support portions 28, 29 are each provided with the long overhanging portion 25, 26 having the overhang length A and the short overhanging portion 24, 27 having the overhang length B on both sides in one of the diagonal directions of the intermediate support portion 28, 29, and the tip portions of each of the overhanging portions 24 to 27 are arranged so as to shift in the crawler width direction within the width of the rolling paths 12, 13. The long overhanging portions 25, 26 are arranged on sides distant from the guide protrusions 20, 21 and the short overhanging portions 24, 27 are arranged on sides close to the guide protrusions 20, 21, respectively. The intermediate support portions 28, 29, the long overhanging portions 25, 26, and the short overhanging portions 24, 27 are arranged substantially point-symmetrically.

The long overhanging portions 25, 26 may be arranged on the sides close to the guide protrusions 20, 21 and the short overhanging portions 24, 27 may be arranged on the sides distant from the guide protrusions 20, 21.

Between the two adjacent core metals 10, on sides opposite to the shift direction of the overhanging portions 24, 26 of one core metal 10, notched portions 24a, 26a separated in the crawler rotation direction from the overhanging portions 25, 27 of the other core metal 10 are provided in the rolling paths 12, 13. One long overhanging portion 25, 26 and the other notched portion 24a, 27a, and the other short overhanging portion 24, 27 and the other notched portion 25a, 26a face each other in the crawler rotation direction, respectively, within the width of the rolling path 12, 13.

With this, the overhanging portions 24 to 27 and the notched portions 24a to 27a are shifted in the crawler rotation direction within the rolling paths 12, 13 between the respective core metals 10, so that the distance between the tips of each of the overhanging portions 24 to 27 and the innermost blade portions 22, 23 of the notched portions 24a to 27a becomes long, and an elastic part filled with the elastic body, such as rubber, is formed in the long distance part. Therefore, when the crawler main body 9 is bent, the crawler main body 9 is bent at the long elastic part between the adjacent core metals 10, and the flexibility of the crawler main body 9 is improved and the durability of the crawler main body 9 is also improved, so that cracks of the crawler main body 9 can be prevented, etc.

The elastic body, etc., of the crawler main body 9 on the rolling path 12, 13 sides become thick between the overhanging portions 24 to 27 and the notched portions 24a to 27a of the crawler main body 9. However, the distance between the tips of each of the overhanging portions 24 to 27 and the innermost blade portions 22, 23 of the notched portions 24a to 27a becomes long. Thus, recessed portions 30, 31 are provided in that part. The recessed portions 30, 31 are recessed from the rolling path 12, 13 sides to the tread 9a sides on both sides in the crawler width direction of the rolling paths 12, 13. Thus, the flexibility of the crawler main body 9 between the core metals 10 can be improved by the recessed portions 30, 31.

In addition, the recessed portions 30, 31 enter a part of the rolling paths 12, 13 from both sides in the crawler width direction, but the rolling paths 12, 13 are of a flat shape continuous in the crawler rotation direction between the recessed portions 30, 31. Therefore, the vertical vibration of the track roller 5 on the rolling paths 12, 13 can be prevented even when passing through the recessed portions 30, 31. The recessed portion 30 is connected to a recessed groove 33 continuing from the vicinity of the rolling path 12 to an outer end on the anti-tread 9b side of the crawler main body 9.

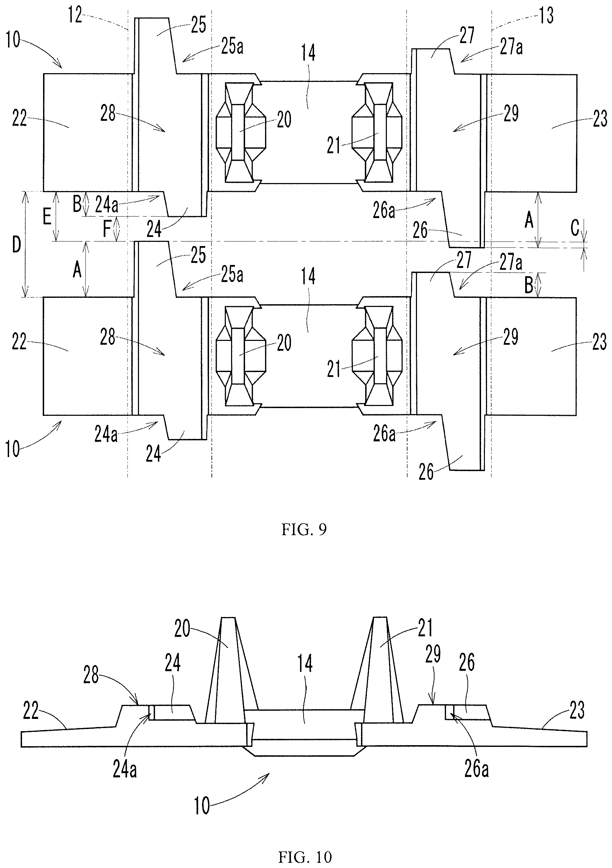

The overhang length A of each of the overhanging portions 25, 26 is about (D+C)/2 where the distance between the two adjacent core metals 10 is set to D and the overlap amount in which the tip portions of the overhanging portions 25, 26 of the respective core metals 10 overlap in substantially the center of the distance D is set to C, as shown in FIG. 9 for example.

In this case, the distance E between the tips of the overhanging portions 25, 26 and corresponding parts of the core metals 10 corresponding thereto is D-A. Therefore, the overhang length B of the overhanging portions 24, 27 is preferably substantially half of that, about (D-A)/2. As a result, the distance F between the overhanging portions 24, 27 and the overhanging portions 25, 26 of the respective core metals 10 of the respective rolling paths 12, 13 becomes about (D-A)/2.

Accordingly, between the overhanging portions 24, 27 and the overhanging portions 25, 26 of the respective core metals 10 corresponding to the respective rolling paths 12, 13, the distance F substantially equal to the overhang length B of the overhanging portions 24, 27 is formed, so that the elastic material between the overhanging portions 24 to 27 can be bent without difficulty when the crawler main body 9 is bent. The magnitude relationship of the dimensions A to F in this embodiment is merely an example and various changes can be made.

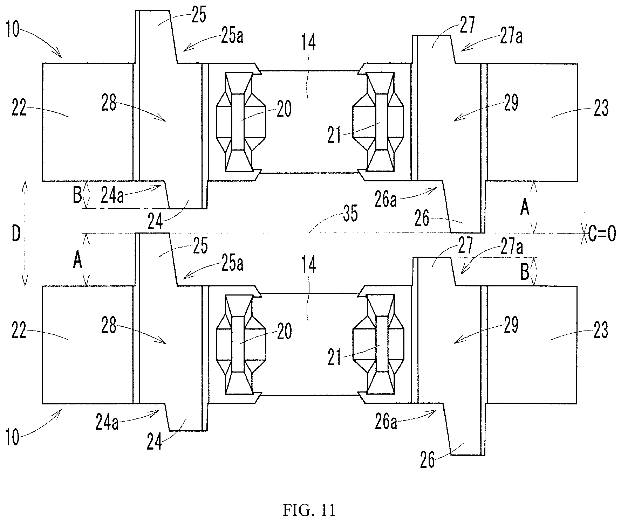

FIG. 11 shows a second embodiment of the present invention. In this embodiment, the overhang length A of the overhanging portions 25, 26 of each core metal 10 is about half of the distance D between the core metals 10, and the tips of each of the overhanging portions 25, 26 are aligned on a straight line 35 in substantially the center between the core metals 10. That is, the overlap amount C on the tip sides of each of the overhanging portions 25, 26 is configured to be C=0. The overhang length B of the overhanging portions 24, 27 is about half of the overhang length A of the overhanging portions 25, 26. Other configurations are the same as those of the first embodiment.

Also in this case, the track roller 5 transfers from the overhanging portion 25 of one core metal 10 to the overhanging portion 26 of the other core metal 10 when the track roller 5 rolls on the rolling paths 12, 13. Thus, the vibration due to the vertical movement of the track roller 5 between the core metals 10 can be prevented.

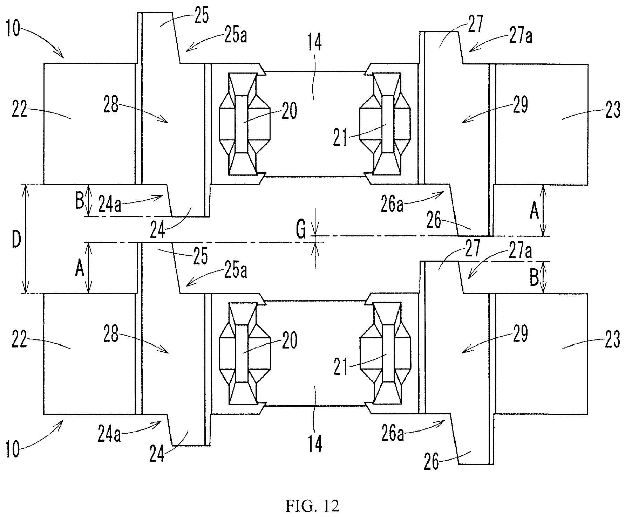

FIG. 12 shows a third embodiment of the present invention. In this embodiment, the overhang length A of the overhanging portions 25, 26 of each core metal 10 is shorter than half of the distance D between the core metals 10, and the tip sides of each of the overhanging portions 25, 26 are arranged close to each other in the crawler rotation direction with a slight distance G on substantially the center side between the core metals 10. Other configurations are the same as those of the first to second embodiments.

Also in such a case, when the diameter of the track roller 5 is sufficiently larger than the distance G between the overhanging portions 25, 26, the track roller 5 transfers from the overhanging portion 25 of one core metal 10 to the overhanging portion 26 of the other core metal 10 without falling into the gap portion between the overhanging portions 25, 26 when the track roller 5 rolls on the rolling paths 12, 13. Thus, the vibration due to the vertical movement of the track roller 5 between the core metals 10 can be prevented.

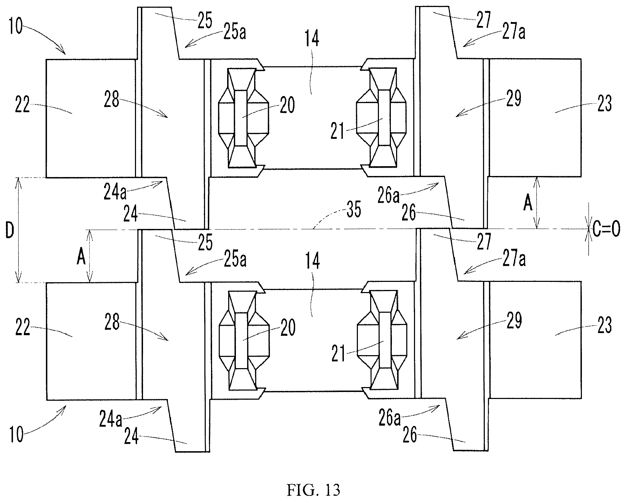

FIG. 13 shows a fourth embodiment of the present invention. In this embodiment, the overhang length A of the overhanging portions 24 to 27 of each core metal 10 is slightly longer than half of the distance D between the core metals 10, and the tip sides of each of the overhanging portions 24 to 27 are arranged so as to overlap each other in the crawler rotation direction by the overlap amount C on substantially the center side between the core metals 10 on the respective rolling paths 12, 13. Other configurations are the same as those of the first to third embodiments.

Even when the tip portions of the corresponding overhanging portions 24, 25 and overhanging portions 26, 27 of the respective rolling paths 12, 13 overlap with the overlap amount C as just described, the vibration due to the vertical movement of the track roller 5 between the core metals 10 can be prevented. Particularly, since the overlapping portion of the overhanging portions 24 to 27 exists for each rolling path 12, 13 on both sides in the crawler width direction, the left and right wheel body portions 7, 8 of the track roller 5 can be supported uniformly, and the vertical vibration on both the left and right sides of the track roller 5 can be further reduced.

In this case, side edges 24b to 27b of each of the overhanging portions 24 to 27 come close to each other at a slight distance, so that, as shown by two-dot chain lines in FIG. 13, it is preferable to make large the distance in the crawler width direction between the tip sides, such as the overlapping portions, of the overhanging portions 24 to 27 by increasing the inclination angle with respect to the crawler rotation direction of the side edges 24b to 27b of the overhanging portions 24 to 27 or reducing the dimension in the crawler width direction of the tip portion sides of the overhanging portions 24 to 27. With this, the occurrence of cracks of the crawler main body 9 between the respective overhanging portions 24 to 27 can be prevented.

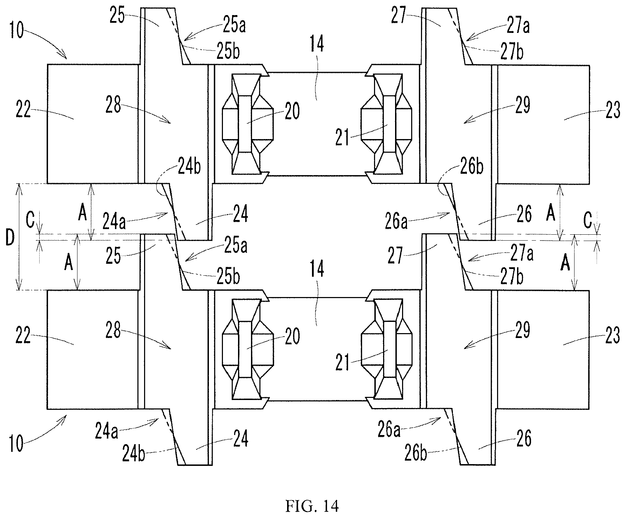

FIG. 14 shows a fifth embodiment of the present invention. In this embodiment, the overhang length A of the overhanging portions 24 to 27 of each core metal 10 is set to be about half of the distance D between the core metals 10, and the overlap amount is configured to be C=0 so that the tips of each of the overhanging portions 24 to 27 are aligned for each rolling path 12, 13 on the straight line 35 in substantially the center between the respective core metals 10. Other configurations are the same as those of the first to fourth embodiments.

Also in this case, the overhanging portions 24 to 27 of each core metal 10 can be continuously provided in the crawler width direction for each rolling path 12, 13, so that the vibration due to the vertical movement of the track roller 5 between the core metals 10 can be prevented.

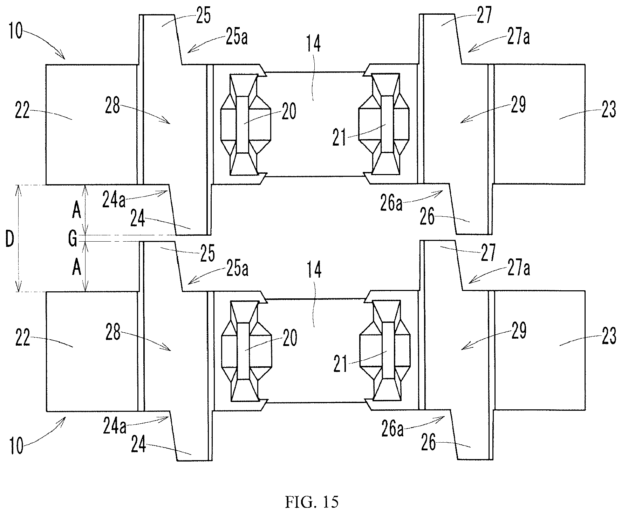

FIG. 15 shows a sixth embodiment of the present invention. In this embodiment, the overhang length A of the overhanging portions 24 to 27 of each core metal 10 is shorter than half of the distance D between the core metals 10, and the tip sides of each of the overhanging portions 24 to 27 are arranged close to each other at a slight distance G in the crawler rotation direction on substantially the center side between the core metals 10. Other configurations are the same as those of the first to fifth embodiments.

Also in this case, when the diameter of the track roller 5 is sufficiently larger than the distance G between the overhanging portions 24 to 27, the track roller 5 transfers from the overhanging portions 24, 26 of one core metal 10 to the overhanging portions 25, 27 of the other core metal 10 without falling into the gap portions between the overhanging portions 24 to 27 when the track roller 5 rolls on the rolling paths 12, 13. Thus, the vibration due to the vertical movement of the track roller 5 between the core metals 10 can be prevented.

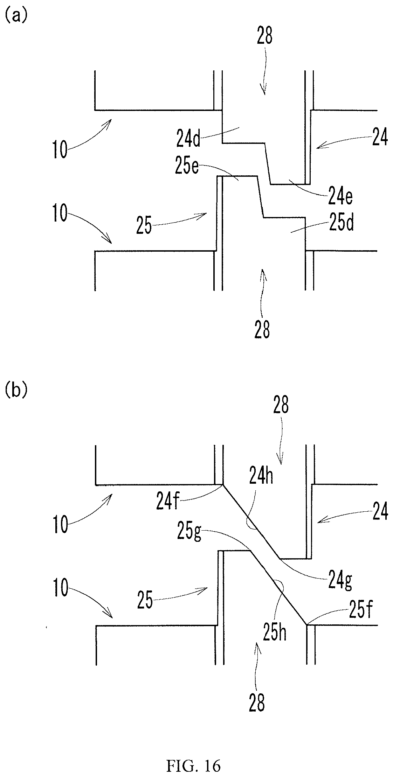

FIG. 16 shows a seventh embodiment of the present invention. The overhanging portions 24, 25 in FIG. 16A each have a base portion 24d, 25d side set to be wide and a tip portion 24e, 25e side set to be narrow, and the tip portion 24e, 25e sides of the overhanging portions 24, 25 are arranged so as to shift in the crawler width direction. The overhanging portions 24, 25 in FIG. 16B are each provided with a hypotenuse 24h, 25h connecting a base portion side end portion 24f, 25f and a tip side end portion 24g, 25g side, on a side opposed to each of the core metal 10, and the tip sides of the overhanging portions 24, 25 are shifted in the crawler width direction.

In this manner, the tip sides of each of the overhanging portions 24, 25 can be arranged so as to shift in the crawler width direction.

As stated above, each embodiment of the present invention has been described in detail, but the present invention should not be limited to the embodiments and various changes can be made. For example, the shape, structure, and arrangement of the drive lugs 16, 17 constituting two left and right rows of lugs on the outer circumferential side of the crawler main body 9 can be changed arbitrarily in the embodiments.

In each embodiment, the overhanging portions 24 to 27 are provided on both sides of each core metal 10 to prevent the vertical vibration of the track roller 5 when the track roller 5 moves straddling between the respective core metals 10. However, a function to prevent lateral displacement between the core metals 10 may be added.

The overhanging portions 24 to 27 and the intermediate support portions 28, 29 of the core metal 10 may be configured such that all or part is exposed on the rolling path 12, 13 sides. Also in that case, it is preferable that each rolling path 12, 13 has the anti-tread 9b sides of the overhanging portions 24 to 27 configured to be substantially flush with other portions and the substantially flush portions are continuous in the crawler rotation direction.

In the overhanging portions 24 to 27 corresponding to the rolling paths 12, 13 of the core metal 10, the shifted portions are located within the width of the rolling paths 12, 13, whereby it is sufficient if the overhanging portions 24 to 27 are shifted in the crawler width direction within the width of the rolling paths 12, 13. In that case, the overhanging portions 24 to 27 corresponding to the rolling paths 12, 13 may be configured to fit within the width of the rolling paths 12, 13 and may be configured such that a part projects to the outside from the width of the rolling paths 12, 13.

The overhanging portions 24 to 27 corresponding to the rolling paths 12, 13 of the core metal 10 may be arranged substantially point-symmetrically with respect to the core metal 10 and may be arranged asymmetrically. When arranged symmetrically, the overhanging portions 24 to 27 may be arranged line-symmetrically as well as point-symmetrically.

## Claims

1. An elastic crawler comprising: a crawler main body mainly composed of an elastic material; and core metals embedded in the crawler main body at substantially equal intervals in a crawler rotation direction;
comprising: rolling paths for track rollers on both sides in a crawler width direction of an anti-tread side of the crawler main body; and
comprising: overhanging portions on both sides in the crawler rotation direction of each of the core metals, overhanging from each of the core metals toward both sides in the crawler rotation direction to support each of the rolling paths,
wherein each of the overhanging portions corresponding to each of the rolling paths of two of the core metals adjacent to each other are arranged such that at least tip portions are arranged so as to shift in the crawler width direction within a width of each of the rolling paths, and
of the two adjacent core metals, the overhanging portion of one of the core metals and the overhanging portion of the other core metal are arranged such that their tips are close to each other or overlap with each other in the crawler rotation direction.

2. The elastic crawler according to claim 1, wherein of each of the overhanging portions between the two adjacent core metals, one of the overhanging portions corresponding to one of the rolling paths of one of the core metals and the other overhanging portion corresponding to the other rolling path of the other core metal are arranged such that their tips are close to each other or overlap with each other in the crawler rotation direction.

3. The elastic crawler according to claim 1, wherein of each of the overhanging portions between the two adjacent core metals, each of the overhanging portions corresponding to each of the rolling paths of one of the core metals and the other overhanging portion corresponding to each of the rolling paths of the other core metal are arranged such that their tip portions are close to each other or overlap with each other in the crawler rotation direction.

4. The elastic crawler according to any one of claims 1 to 3, wherein on sides opposite to a shift direction of the overhanging portions corresponding to the rolling paths between the two adjacent core metals, notched portions separated in the crawler rotation direction from the overhanging portions of the adjacent core metals are provided in the rolling paths.

5. The elastic crawler according to any one of claims 1 to 4, wherein two of the overhanging portions corresponding to each of the rolling paths of each of the core metals include a long overhanging portion and a short overhanging portion having different overhang lengths, and
the long overhanging portion and the short overhanging portion are arranged substantially point-symmetrically with respect to the core metal.

6. The elastic crawler according to any one of claims 1 to 4, wherein two of the overhanging portions corresponding to each of the rolling paths of the two adjacent core metals are substantially equal in overhang length.

7. The elastic crawler according to any one of claims 1 to 6, wherein each of the overhanging portions has a thin flat shape in a crawler thickness direction and is arranged near an anti-tread side of each of the rolling paths.

8. The elastic crawler according to any one of claims 1 to 7, wherein each of the core metals has an intermediate support portion for supporting each of the rolling paths, in the middle of the crawler rotation direction between each of the overhanging portions so as to be substantially flush, and
the rolling path sides of each of the overhanging portions and the intermediate support portion are continuous in the crawler rotation direction.

9. The elastic crawler according to any one of claims 1 to 8, wherein the crawler main body includes recessed portions that are recessed from the rolling path side to a tread side, on both sides in the crawler width direction of each of the rolling paths between the respective adjacent core metals, and
the rolling paths each have a flat shape continuous in the crawler rotation direction via between the recessed portions.
